# EUROPEAN PATENT APPLICATION

(11) **EP 4 300 125 A1**
(43) Date of publication of application: **03.01.2024**
(21) Application number: 21927226.7
(22) Date of filing: 25.02.2021
(51) Int. Cl.: G01S 5/02, H04W 64/00

(54) **RANGING METHOD AND APPARATUS, AND USER EQUIPMENT AND STORAGE MEDIUM**

(71) Applicant: Beijing Xiaomi Mobile Software Co., Ltd., Beijing 100085 (CN)
(72) Inventor: HONG, Wei, Beijing 100085 (CN); YU, Lei, Beijing 100085 (CN)
(74) Representative: dompatent von Kreisler Selting Werner - Partnerschaft von Patent- und Rechtsanwälten mbB
(86) International application number: PCT/CN2021/077980
(87) International publication number: WO 2022/178788

(57) **Abstract**

A ranging method and apparatus, and a user equipment and a storage medium, which belong to the technical field of measurement. The method comprises: a ranging user equipment (UE) receiving a ranging service request transmitted by a ranging-initiating UE, wherein the ranging service request comprises an identifier and a ranging parameter (101); the ranging UE determining a ranging role of the ranging UE according to the identifier in the ranging service request, wherein the ranging role comprises an observation UE or a target UE (102); and the ranging UE conducting ranging according to the ranging parameter and the ranging role (103). By means of the ranging method, on the basis of an identifier in a ranging service request, two UEs waiting for ranging can directly find each other, such that a ranging UE in the two UEs waiting for ranging can automatically conduct ranging, thereby improving the ranging efficiency.

## Description

### FIELD

The present disclosure relates to the technical field of measurement, and especially to a ranging method, a ranging apparatus, a user equipment (UE), and a storage medium.

### BACKGROUND

A ranging technology mainly determines distance parameters and/or relative direction parameters between two nodes (for example, two user equipment (UEs)). With the continuous popularization of the user equipment, the demand for ranging of the user equipment is more and more strong, and the ranging technology is more and more widely used in various fields (such as smart home, smart factory, navigation, positioning and other fields). Therefore, a high-efficiency, high-precision, low-power-consumption and automatic ranging method is urgently needed to improve user experience.

### SUMMARY

A ranging method, a ranging apparatus, a user equipment (UE), and a storage medium provided in the present disclosure are used to solve problems of low efficiency, low precision, high power consumption and poor user experience of ranging methods in related technologies.

A ranging method provided in an embodiment of the present disclosure includes receiving, by a ranging user equipment (UE), a ranging service request sent by a ranging initiating UE, in which the ranging service request includes an identifier and a ranging parameter, determining, by the ranging UE, a ranging role of the ranging UE according to the identifier, in which the ranging role includes an observation UE or a target UE, and performing, by the ranging UE, ranging according to the ranging parameter and the ranging role.

A ranging method provided in another embodiment of the present disclosure includes sending, by a ranging initiating user equipment (UE), a ranging service request to a ranging UE, in which the ranging service request includes an identifier and a ranging parameter, and the ranging UE performs ranging according to the identifier and the ranging parameter.

A ranging method provided in still another embodiment of the present disclosure includes receiving, by a second access and mobility management function (AMF), a ranging service request sent by a ranging initiating UE, in which the ranging service request includes an identifier and a ranging parameter, determining, by the second AMF, a first AMF corresponding to a ranging UE according to the identifier, and sending, by the second AMF, the ranging service request to the ranging UE via the first AMF.

A ranging apparatus provided in another embodiment of the present disclosure includes a receiving module configured to receive a ranging service request sent by a ranging initiating UE, in which the ranging service request includes an identifier and a ranging parameter, a processing module configured to determine a ranging role of the ranging UE according to the identifier in the ranging service request, in which the ranging role includes an observation UE or a target UE, in which the processing module is further configured to perform ranging according to the ranging parameter and the ranging role.

A ranging apparatus provided in another embodiment of the present disclosure includes a sending module configured to send a ranging service request to a ranging UE, in which the ranging service request includes an identifier and a ranging parameter, and the ranging UE performs ranging according to the identifier and the ranging parameter.

A ranging apparatus provided in another embodiment of the present disclosure includes a receiving module configured to receive a ranging service request sent by a ranging initiating UE, in which the ranging service request includes an identifier and a ranging parameter, a processing module configured to determine a first AMF corresponding to a ranging UE according to the identifier, and send the ranging service request to the ranging UE via the first AMF.

A terminal device provided in another embodiment of the present disclosure includes a transceiver, a memory, and a processor connected to the transceiver and the memory, respectively, and configured to control wireless signal transmission and reception of the transceiver and be capable of implementing the methods provided in the embodiment and another embodiment of the present disclosure by executing computer-executable instructions on the memory.

A core network device provided in another embodiment of the present disclosure includes a transceiver, a memory, and a processor connected to the transceiver and the memory, respectively, and configured to control wireless signal transmission and reception of the transceiver and be capable of implementing the method provided in still another embodiment of the present disclosure by executing computer-executable instructions on the memory.

A computer storage medium is provided in another embodiment of the present disclosure. The computer storage medium having stored therein computer-executable instructions that, after executed by a processor, cause the above method to be implemented.

The ranging method, the ranging apparatus, the terminal device, and the computer storage medium are provided in the embodiment of the present disclosure. The ranging service request including the identifier and the ranging parameter sent by the ranging initiating UE may be received by the ranging UE, and the ranging role of the ranging UE is determined according to the identifier in the ranging service request, in which the ranging role includes an observation UE or a target UE, so that the ranging may be performed by the ranging UE according to the ranging parameter and the ranging role. Therefore, in the embodiment of the present disclosure, two UEs to be ranged may directly discover each other based on the identifier in the ranging service request, so that a ranging UE in the two UEs to be ranged may automatically perform ranging, thus improving the ranging efficiency and accuracy, reducing power consumption, and improving user experience.

Additional aspects and advantages of the present disclosure will be set forth, in part, in the following description, and in part will be apparent from the following description, or learned by practice of the present disclosure.

### BRIEF DESCRIPTION OF THE DRAWINGS

The above-mentioned and/or additional aspects and advantages of the present disclosure will be apparent and readily understood from the following description of embodiments taken in conjunction with the accompanying drawings.
FIG. 1 is a flow chart of a ranging method provided in an embodiment of the present disclosure.
FIG. 2 is a schematic diagram of a relative position of an observation user equipment (UE) and a target UE provided in an embodiment of the present disclosure.
FIG. 3 is an architectural diagram of a ranging service provided in an embodiment of the present disclosure.
FIG. 4 is a flow chart of a ranging method provided in another embodiment of the present disclosure.
FIG. 5 is a flow chart of a ranging method provided in another embodiment of the present disclosure.
FIG. 6 is a flow chart of a ranging method provided in another embodiment of the present disclosure.
FIG. 7 is a flow chart of a ranging method provided in another embodiment of the present disclosure.
FIG. 8 is a flow chart of a ranging method provided in another embodiment of the present disclosure.
FIG. 9 is a flow chart of a ranging method provided in another embodiment of the present disclosure.
FIG. 10 is a flow chart of a ranging method provided in another embodiment of the present disclosure.
FIG. 11 is a flow chart of a ranging method provided in another embodiment of the present disclosure.
FIG. 12 is a flow chart of a ranging method provided in another embodiment of the present disclosure.
FIG. 13 is a flow chart of a ranging method provided in another embodiment of the present disclosure.
FIG. 14 is a flow chart of a ranging method provided in another embodiment of the present disclosure.
FIG. 15 is a flow chart of a ranging method provided in another embodiment of the present disclosure.
FIG. 16 is a schematic diagram of a ranging apparatus provided in an embodiment of the present disclosure.
FIG. 17 is a schematic diagram of a ranging apparatus provided in another embodiment of the present disclosure.
FIG. 18 is a schematic diagram of a ranging apparatus provided in an embodiment of the present disclosure.
FIG. 19 is a block diagram of a user equipment (UE) provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are only for the purpose of describing specific embodiments, but should not be construed to limit the present disclosure. As used in the embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if' and "in case that" may be construed to mean "when" or "upon" or "in response to determining" depending on the context.

Embodiments of the present disclosure are described in detail below, examples of which are illustrated in the accompanying drawings. The same or similar reference numerals represent the same or similar elements throughout the descriptions. The embodiments described below with reference to the accompanying drawings are illustrative, are intended to explain the present disclosure and cannot be construed as limiting the present disclosure.

In a ranging method provided in an embodiment of the present disclosure, a ranging service request sent by a ranging initiating UE is received by a ranging user equipment (UE), in which the ranging service request includes an identifier and a ranging parameter, a ranging role of the ranging UE is determined by the ranging UE according to the identifier in the ranging service request, the ranging role includes an observation UE or a target UE, and ranging is performed by the ranging UE according to the ranging parameter and the ranging role. Therefore, in the embodiment of the present disclosure, two UEs to be ranged may directly discover each other based on the identifier in the ranging service request, so that a ranging UE in the two UEs to be ranged may automatically perform ranging, thus improving the ranging efficiency and accuracy, reducing power consumption, and improving user experience.

A ranging method, a ranging apparatus, a user equipment (UE), and a storage medium provided in the present disclosure will be described in detail below with reference to the accompanying drawings.

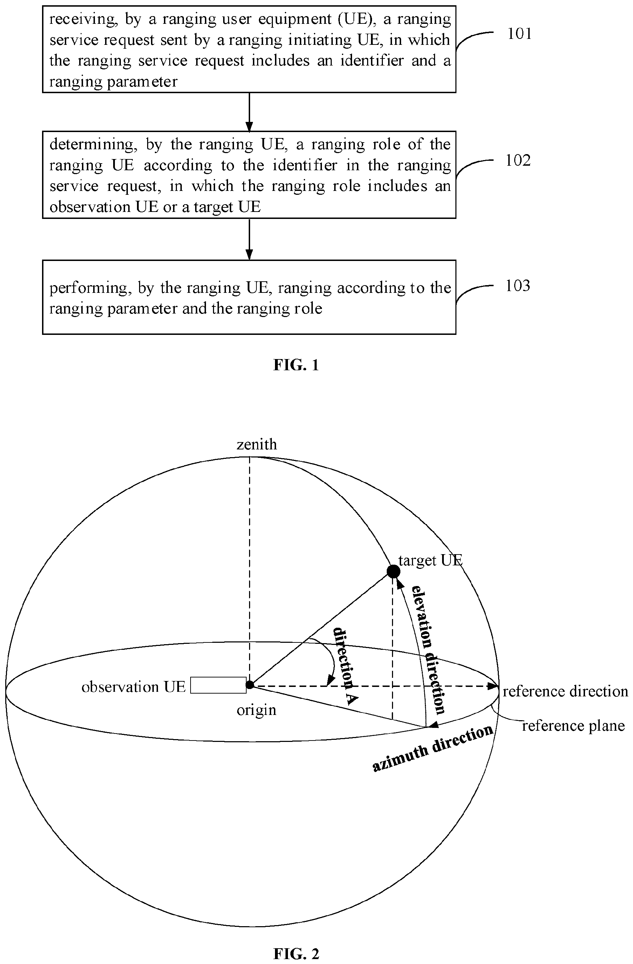

FIG. 1 is a flow chart of a ranging method provided in an embodiment of the present disclosure, which is applied to a ranging user equipment (UE). As shown in FIG. 1, the ranging method may include steps as follows.

In step 101, a ranging service request sent by a ranging initiating user equipment (UE) is received by a ranging UE, in which the ranging service request includes an identifier and a ranging parameter.

It is to be noted that the ranging method according to an embodiment of the present disclosure may be applied to any UE. The UE may be a device that provides voice and/or data connectivity to a user. The UE can communicate with one or more core networks via a radio access network (RAN). The UE can be an Internet of Things terminal, such as a sensor device, a mobile phone (or referred to as a "cellular" phone) and a computer with an Internet of Things terminal. For example, it can be a fixed, portable, pocket-sized, handheld, built-in computer or vehicle-mounted apparatus. For example, a station (STA), a subscriber unit, a subscriber station, a mobile station, a mobile, a remote station, an access point, a remote terminal, an access terminal, a user terminal, or a user agent. Alternatively, the UE may be a device of an unmanned aerial vehicle. Alternatively, the UE may be a vehicle-mounted device, for example, a driving computer with a wireless communication function, or a wireless terminal externally connected with a driving computer. Alternatively, the UE may be a roadside device, such as a street lamp, a signal lamp or other roadside devices with a wireless communication function.

The ranging parameter may include ranging contents (such as a distance value and an angle value between an observation UE and a target UE, a direction of the target UE to the observation UE, etc.), quality of service (QoS) requirements, reporting periodicity, etc. In an embodiment of the present disclosure, the identifier of the ranging service request may include an identifier of the observation UE and an identifier of the target UE. The observation UE may be a UE for performing a ranging operation, and the observation UE is configured to perform ranging on the target UE. In an embodiment of the present disclosure, the observation UE may perform ranging on the target UE based on the ranging parameter to generate a ranging result. Of course, in other embodiments of the present disclosure, the identifier of the ranging service request may merely include the identifier of the observation UE or the identifier of the target UE. For example, in case that the ranging service request is merely sent to the observation UE, the identifier of the ranging service request may merely include the identifier of the target UE, so that the observation UE may determine the target UE according to the identifier of the target UE.

As an example, FIG. 2 is a schematic diagram of a relative position of an observation user equipment (UE) and a target UE provided in an embodiment of the present disclosure. As shown in FIG. 2, the observation UE has a reference plane and a reference direction. The direction from the target UE to the observation UE may be a direction directed from a line connecting the observation UE and the target UE to a reference direction, namely, a direction A shown in FIG. 2. The direction from the target UE to the observation UE may be represented by an azimuth direction and an elevation direction of the target UE. Referring to FIG. 2, it may be seen that the azimuth direction of the target UE is an angle formed between a reference direction and a line from the observation UE to the target UE projected on a same plane as the reference direction orthogonal to a zenith. The target UE also has an elevation direction, and the elevation direction is a direction directed from a horizontal plane to the line connecting the observation UE and the target UE.

The observation UE may implement ranging on the target UE by measuring the distance between the target UE and the observation UE and the direction from the target UE to the observation UE as shown in FIG. 2. Moreover, a ranging service may be performed with or without 5G coverage.

Further, in an embodiment of the present disclosure, the ranging initiating UE may be the observation UE. In another embodiment of the present disclosure, the ranging initiating UE may be the target UE. In yet another embodiment of the present disclosure, the ranging initiating UE may not be any one of the target UE and the observation UE.

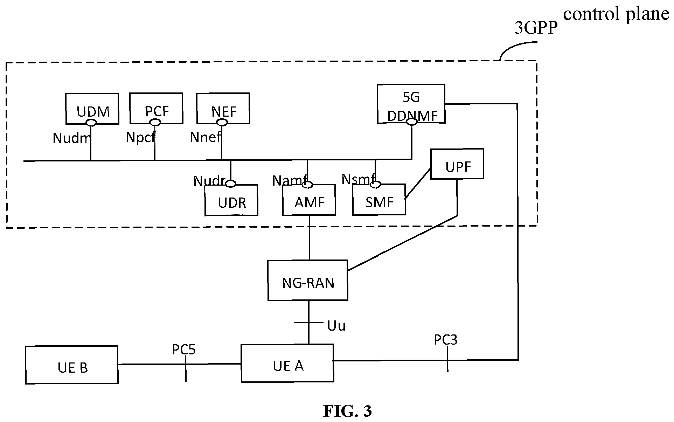

FIG. 3 is an architectural diagram of a ranging service provided in an embodiment of the present disclosure. As shown in FIG. 3, a ranging service architecture includes an observation UE A, a target UE B and a ranging initiating UE (not shown in FIG. 3). The observation UE A may perform ranging on the target UE B based on the ranging service request sent by the ranging initiating UE. It is also to be noted that an interaction between the observation UE A and the target UE B may be implemented based on an access and mobility management function (AMF) in a 3GPP control plane. Similarly, an interaction between the observation UE A and the ranging initiating UE, and an interaction between the target UE B and the ranging initiating UE may also be implemented based on the AMF in the 3GPP control plane.

In step 102, a ranging role of the ranging UE is determined by the ranging UE according to the identifier in the ranging service request, in which the ranging role includes an observation UE or a target UE.

As a possible implementation, a method for determining, by the ranging UE, the ranging role of the ranging UE according to the identifier in the ranging service request may include in case that an identifier of the ranging UE is consistent with the identifier of the observation UE, determining that the ranging role of the ranging UE is the observation UE, and in case that the identifier of the ranging UE is consistent with the identifier of the target UE, determining that the ranging role of the ranging UE is the target UE.

In step 103, ranging is performed by the ranging UE according to the ranging parameter and the ranging role.

In the ranging method provided in the embodiment of the present disclosure, the ranging service request including the identifier and the ranging parameter sent by the ranging initiating UE may be received by the ranging UE, and the ranging role of the ranging UE is determined according to the identifier in the ranging service request, so that the ranging may be performed by the ranging UE according to the ranging parameter and the ranging role. Therefore, in the embodiment of the present disclosure, two UEs to be ranged may directly discover each other based on the identifier in the ranging service request, so that a ranging UE in the two UEs to be ranged may automatically perform ranging, thus improving the ranging efficiency and accuracy, reducing power consumption, and improving user experience.

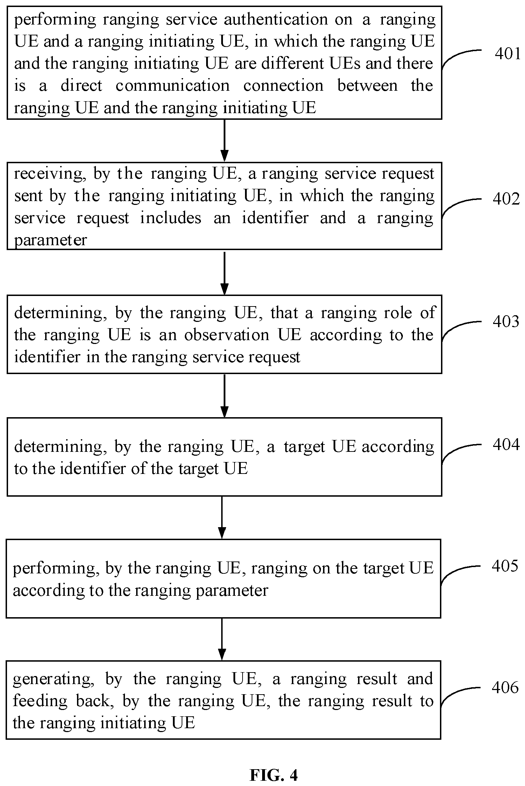

FIG. 4 is a flow chart of a ranging method provided in another embodiment of the present disclosure, which is applied to a ranging UE. As shown in FIG. 4, the method may include steps as follows.

In step 401, ranging service authentication is performed on a ranging UE and a ranging initiating UE, in which the ranging UE and the ranging initiating UE are different UEs and there is a direct communication connection between the ranging UE and the ranging initiating UE.

As a possible implementation, performing the ranging service authentication on the ranging UE and the ranging initiating UE may include authorizing the ranging service of the ranging UE and the ranging initiating UE, which may specifically include mutual discovery of two UEs to be ranged, and provision of privacy or ranging service policy or ranging parameters.

In step 402, a ranging service request sent by the ranging initiating UE is received by the ranging UE, in which the ranging service request includes an identifier and a ranging parameter.

As a possible implementation, based on the direct communication connection between the ranging UE and the ranging initiating UE, the ranging initiating UE may discover the ranging UE by means of direct communication and send the ranging service request to the ranging UE.

In step 403, the ranging UE determines that a ranging role of the ranging UE is an observation UE according to the identifier in the ranging service request.

In a possible implementation, the ranging UE is the observation UE, and the ranging initiating UE is a target UE. In another possible implementation, the ranging UE is the observation UE, and the ranging initiating EU is not the observation UE and is not the target UE.

In step 404, a target UE is determined by the ranging UE according to an identifier of the target UE.

As a possible implementation, the ranging UE may broadcast the identifier of the target UE, so that each UE may receive the identifier of the target UE, and compare its own identifier with the identifier of the target UE. When an identifier of a certain UE is consistent with the identifier of the target UE, it is determined that the certain UE is the target UE, and the target UE may feed back notification information to the ranging UE, so that the ranging UE may determine the target UE based on the notification information.

In step 405, ranging is performed on the target UE by the ranging UE according to the ranging parameter.

As a possible implementation, the ranging UE may implement ranging on the target UE by determining the distance and the angle between the ranging UE and the target UE, and the direction from the target UE to the ranging UE.

In step 406, the ranging UE generates a ranging result and feeds back the ranging result to the ranging initiating UE.

As a possible implementation, the ranging UE may directly send the ranging result to the ranging initiating UE based on the communication connection between the ranging UE and the ranging initiating UE.

In the ranging method provided in the embodiment of the present disclosure, the observation UE may directly receive the ranging service request including the identifier and the ranging parameter sent by the ranging initiating UE, and determine the target UE according to the identifier in the ranging service request, so that the observation UE may perform ranging on the target UE according to the ranging parameter to generate the ranging result, and feed back the ranging result to the ranging initiating UE. Therefore, in the embodiment of the present disclosure, the ranging service request and the ranging result may be directly exchanged between the observation UE and the ranging initiating UE, so that the ranging service may be started based on an interaction between the UEs, thus ensuring the automation of the ranging method, improving the ranging efficiency and accuracy, reducing the power consumption, and improving user experience.

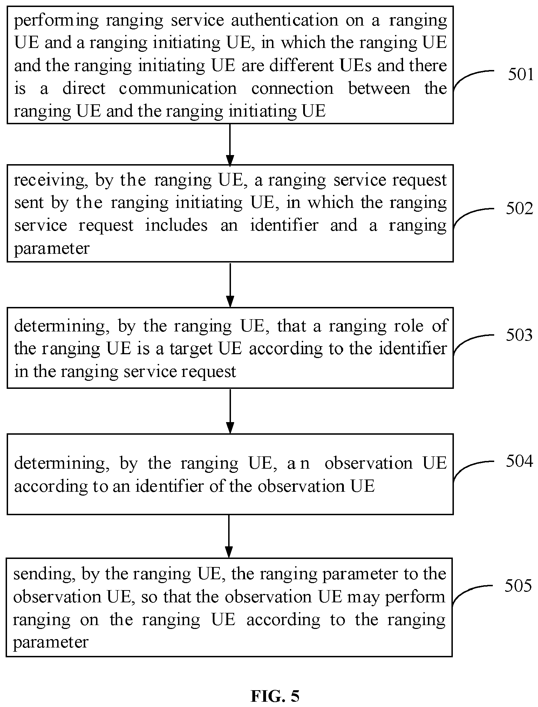

FIG. 5 is a flow chart of a ranging method provided in another embodiment of the present disclosure, which is applied to a ranging UE. As shown in FIG. 5, the method may include steps as follows.

In step 501, ranging service authentication is performed on a ranging UE and a ranging initiating UE, in which the ranging UE and the ranging initiating UE are different UEs and there is a direct communication connection between the ranging UE and the ranging initiating UE.

In step 502, a ranging service request sent by the ranging initiating UE is received by the ranging UE, in which the ranging service request includes an identifier and a ranging parameter.

In step 503, the ranging UE determines that a ranging role of the ranging UE is a target UE according to the identifier in the ranging service request.

In a possible implementation, the ranging UE is the target UE, and the ranging initiating UE is the observation UE. In another possible implementation, the ranging UE is the target UE, and the ranging initiating EU is not the observation UE and is not the target UE.

In step 504, an observation UE is determined by the ranging UE according to an identifier of the observation UE.

As a possible implementation, the ranging UE may broadcast the identifier of the observation UE, so that each UE may receive the identifier of the observation UE, and compare its own identifier with the identifier of the observation UE. When an identifier of a certain UE is consistent with the identifier of the observation UE, it is determined that the certain UE is the observation UE, and the observation UE may feed back notification information to the ranging UE, so that the ranging UE may determine the observation UE based on the notification information.

In step 506, the ranging parameter is sent by the ranging UE to the observation UE, so that the observation UE may perform ranging on the ranging UE according to the ranging parameter.

In a possible implementation, after the observation UE completes ranging on the ranging UE and generates a ranging result, the ranging result is directly fed back to the ranging initiating UE.

In another possible implementation, after the observation UE completes ranging on the ranging UE and generates a ranging result, the ranging result is fed back to the ranging UE, so that the ranging UE forwards the ranging result to the ranging initiating UE.

In the ranging method provided in the embodiment of the present disclosure, the target UE may receive the ranging service request including the identifier and ranging parameter sent by the ranging initiating UE, determine the observation UE according to the identifier in the ranging service request, and send the ranging parameter to the observation UE, so that the observation UE may perform ranging on the ranging UE according to the ranging parameter. Therefore, in the embodiment of the present disclosure, the ranging service request and the ranging result may be exchanged between the target UE and the ranging initiating UE, so that the ranging service may be started based on an interaction between the UEs, thus ensuring the automation of the ranging method, improving the ranging efficiency and accuracy, reducing the power consumption, and improving user experience.

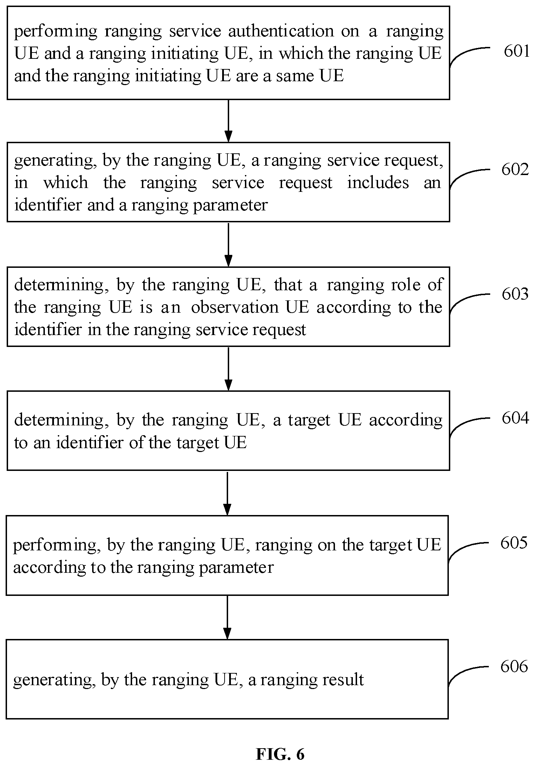

FIG. 6 is a flow chart of a ranging method provided in another embodiment of the present disclosure, which is applied to a ranging UE. As shown in FIG. 6, the method may include steps as follows.

In step 601, ranging service authentication is performed on a ranging UE and a ranging initiating UE, in which the ranging UE and the ranging initiating UE are a same UE (that is, the ranging UE and the ranging initiating UE are collocated).

In step 602, the ranging UE generates a ranging service request, in which the ranging service request includes an identifier and a ranging parameter.

In step 603, the ranging UE determines that a ranging role of the ranging UE is an observation UE according to the identifier in the ranging service request.

In step 604, the ranging UE determines a target UE according to an identifier of the target UE.

In step 605, the ranging UE performs ranging on the target UE according to the ranging parameter.

In step 606, the ranging UE generates a ranging result.

In the ranging method provided in the embodiment of the present disclosure, the observation UE may be used as the ranging initiating UE to perform ranging on the target UE to generate the ranging result. Thus, the automation of the ranging method is ensured, the ranging efficiency and accuracy are improved, the power consumption is reduced, and user experience is improved.

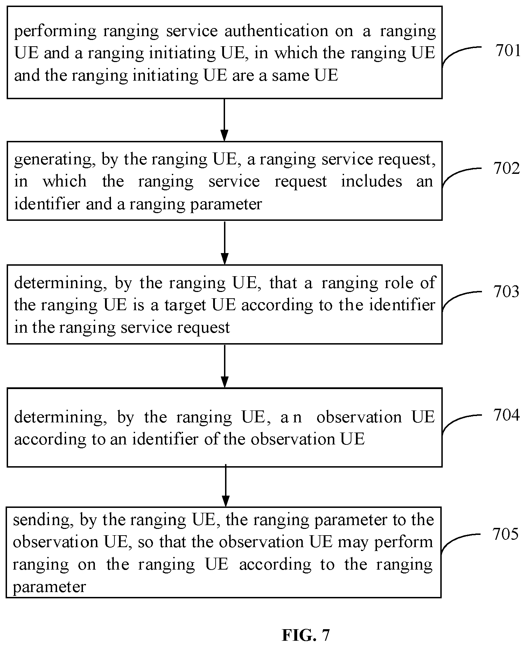

FIG. 7 is a flow chart of a ranging method provided in another embodiment of the present disclosure, which is applied to a ranging UE. As shown in FIG. 7, the method may include steps as follows.

In step 701, ranging service authentication is performed on a ranging UE and a ranging initiating UE, in which the ranging UE and the ranging initiating UE are a same UE.

In step 702, the ranging UE generates a ranging service request, in which the ranging service request includes an identifier and a ranging parameter.

In step 703, the ranging UE determines that a ranging role of the ranging UE is a target UE according to the identifier in the ranging service request.

In step 704, the ranging UE determines an observation UE according to an identifier of the observation UE.

In step 706, the ranging parameter is sent by the ranging UE to the observation UE, so that the observation UE may perform ranging on the ranging UE according to the ranging parameter.

In a possible implementation, after the observation UE completes ranging on the ranging UE and generates the ranging result, the ranging result is directly fed back to the ranging initiating UE.

In the ranging method provided in the embodiment of the present disclosure, the target UE may be used as the ranging initiating UE to perform ranging on the target UE to generate the ranging result. Thus, the automation of the ranging method is ensured, the ranging efficiency and accuracy are improved, the power consumption is reduced, and user experience is improved.

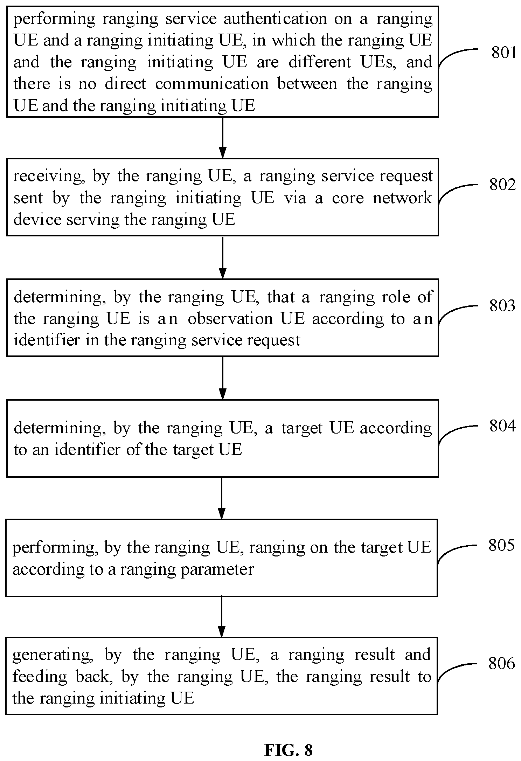

FIG. 8 is a flow chart of a ranging method provided in another embodiment of the present disclosure, which is applied to a ranging UE. As shown in FIG. 8, the method may include steps as follows.

In step 801, ranging service authentication is performed on a ranging UE and a ranging initiating UE, in which the ranging UE and the ranging initiating UE are different UEs, and there is no direct communication between the ranging UE and the ranging initiating UE.

In step 802, a ranging service request sent by the ranging initiating UE via a core network device serving the ranging UE is received by the ranging UE.

The core network device may include an access and mobility management function (AMF). In a possible implementation, a method for receiving, by the ranging UE, the ranging service request sent by the ranging initiating UE via the core network device serving the ranging UE may include receiving the ranging service request sent by a first AMF serving the ranging UE, in which the ranging service request is sent by the ranging initiating UE to the first AMF via a second AMF serving the ranging initiating UE.

In step 803, the ranging UE determines that a ranging role of the ranging UE is an observation UE according to an identifier in the ranging service request.

In step 804, the ranging UE determines a target UE according to an identifier of the target UE.

In step 805, the ranging UE performs ranging on the target UE according to a ranging parameter.

In step 806, the ranging UE generates a ranging result and feeds back the ranging result to the ranging initiating UE.

In a possible implementation, a method for feeding back, by the ranging UE, the ranging result to the ranging initiating UE may include sending the ranging result to the first AMF, so that the first AMF sends the ranging result to the ranging initiating UE via the second AMF.

In the ranging method provided in the embodiment of the present disclosure, the observation UE may receive the ranging service request including the identifier and the ranging parameter sent by the ranging initiating UE via the core network device AMF serving the observation UE, and determine the target UE according to the identifier in the ranging service request, so that the observation UE may perform ranging on the target UE according to the ranging parameter to generate the ranging result, and feed back the ranging result to the ranging initiating UE. Referring to FIG. 3, it may be seen that the core network device AMF is substantially located at the 3GPP control plane. Therefore, in the embodiment of the present disclosure, the observation UE and the ranging initiating UE may exchange the ranging service request and the ranging result at the 3GPP control plane, that is, the ranging service may be started based on the 3GPP control plane, thus ensuring the automation of the ranging method, ensuring a low latency ranging service and accuracy, reducing power consumption, and improving the ranging efficiency.

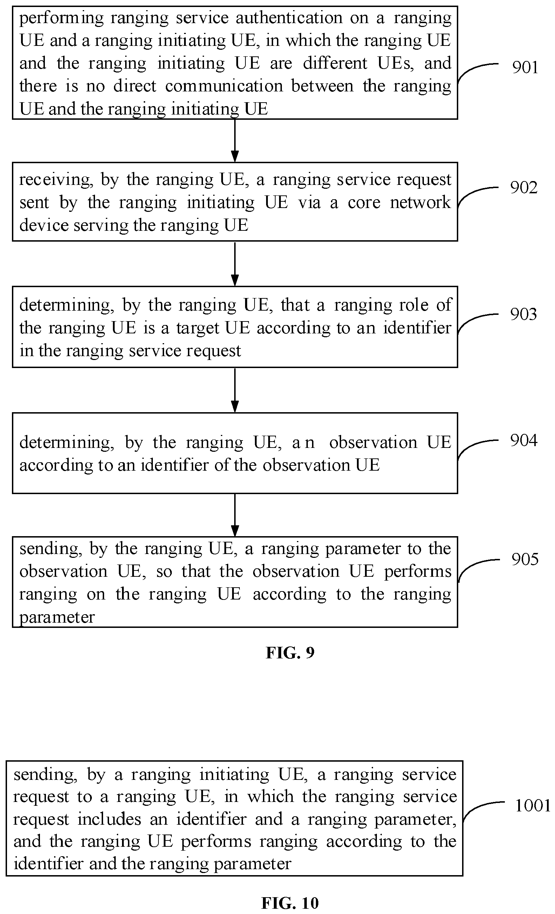

FIG. 9 is a flow chart of a ranging method provided in another embodiment of the present disclosure, which is applied to a ranging UE. As shown in FIG. 9, the method may include steps as follows.

In step 901, ranging service authentication is performed on a ranging UE and a ranging initiating UE, in which the ranging UE and the ranging initiating UE are different UEs, and there is no direct communication between the ranging UE and the ranging initiating UE.

In step 902, a ranging service request sent by the ranging initiating UE via a core network device serving the ranging UE is received by the ranging UE.

In step 903, the ranging UE determines that a ranging role of the ranging UE is a target UE according to an identifier in the ranging service request.

In step 904, the ranging UE determines an observation UE according to an identifier of the observation UE.

In step 905, the ranging UE sends a ranging parameter to the observation UE, so that the observation UE performs ranging on the ranging UE according to the ranging parameter.

In a possible implementation, after the observation UE performs ranging on the ranging UE to obtain the ranging result, the ranging result may be directly fed back to the ranging initiating UE.

In another possible implementation, the observation UE obtains the ranging result after performing ranging on the ranging UE, and sends the ranging result to the ranging UE, so that the ranging UE sends the ranging result to the first AMF, and the first AMF forwards the ranging result to the ranging initiating UE via the second AMF.

In the ranging method provided in the embodiment of the present disclosure, the target UE may receive the ranging service request including the identifier and the ranging parameter sent by the ranging initiating UE via the core network device AMF serving the target UE, and determine the observation UE according to the identifier in the ranging service request, so that the observation UE may perform ranging on the target UE according to the ranging parameter to generate the ranging result, and feed back the ranging result to the ranging initiating UE. Referring to FIG. 3, it may be seen that the core network device AMF is substantially located at the 3GPP control plane. Therefore, in the embodiment of the present disclosure, the target UE and the ranging initiating UE may exchange the ranging service request and the ranging result at the 3GPP control plane, that is, the ranging service may be started based on the 3GPP control plane, thus ensuring the automation of the ranging method, ensuring a low latency ranging service and accuracy, reducing power consumption, and improving the ranging efficiency.

FIG. 10 is a flow chart of a ranging method provided in another embodiment of the present disclosure, which is applied to a ranging initiating UE. As shown in FIG. 10, the method may include a step as follows.

In step 1001, a ranging service request is sent by a ranging initiating user equipment (UE) to a ranging UE, in which the ranging service request includes an identifier and a ranging parameter, and the ranging UE performs ranging according to the identifier and the ranging parameter. The identifier of the ranging service request includes an identifier of an observation UE and an identifier of a target UE.

As a possible implementation, a method for sending, by the ranging initiating UE, the ranging service request to the ranging UE may include, when there is a direct communication between the ranging initiating UE and the ranging UE, discovering, by the ranging initiating UE, the ranging UE by means of the direct communication, and sending, by the ranging initiating UE, the ranging service request to the ranging UE.

As another possible implementation, a method for sending, by the ranging initiating UE, the ranging service request to the ranging UE may include as follows.

There is no direct communication between the ranging initiating UE and the ranging UE. At this time, the second AMF serving the ranging initiating UE queries a unified data management (UDM) according to the identifier of the observation UE and the identifier of the target UE. In case that the second AMF queries an AMF serving the observation UE, the observation UE is determined as the ranging UE, the AMF serving the observation UE is determined as the first AMF, and the ranging initiating UE is enabled to forward the ranging service request to the first AMF via the second AMF, so that the first AMF forwards the ranging service request to the observation UE. In case that the second AMF queries an AMF serving the target UE, the target UE is determined as the ranging UE, the AMF serving the target UE is determined as the first AMF, and the ranging initiating UE is enabled to forward the ranging service request to the first AMF via the second AMF, so that the first AMF forwards the ranging service request to the observation UE. In case that the second AMF queries an AMF serving the target UE and an AMF serving the observation UE, any one of the target UE and the observation UE is determined as the ranging UE, and an AMF serving the ranging UE is determined as the first AMF (that is, any one of the AMF serving the observation UE and the AMF serving the target UE), and the ranging initiating UE is enabled to forward the ranging service request to the first AMF via the second AMF, so that the first AMF forwards the ranging service request to the observation UE.

In an embodiment of the present disclosure, in case that the ranging UE is the observation UE, a ranging application server may also receive the ranging result sent by the ranging UE.

In the ranging method provided in the embodiment of the present disclosure, the ranging initiating UE may send the ranging service request including the identifier and the ranging parameter to the ranging UE, so that the ranging UE may perform ranging according to the identifier and the ranging parameter. Therefore, in the embodiment of the present disclosure, two UEs to be ranged may directly discover each other based on the identifier in the ranging service request, so that a ranging UE in the two UEs to be ranged may automatically perform ranging, thus improving the ranging efficiency and accuracy, reducing power consumption, and improving user experience.

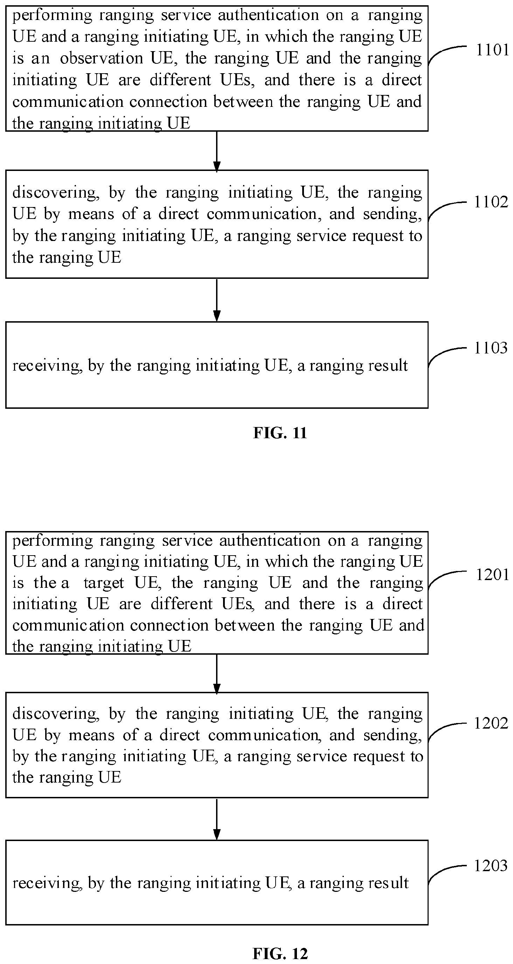

FIG. 11 is a flow chart of a ranging method provided in another embodiment of the present disclosure, which is applied to a ranging initiating UE. As shown in FIG. 11, the method may include steps as follows.

In step 1101, ranging service authentication is performed on a ranging UE and a ranging initiating UE, in which the ranging UE is an observation UE, the ranging UE and the ranging initiating UE are different UEs, and there is a direct communication connection between the ranging UE and the ranging initiating UE.

As an alternative implementation, the ranging initiating UE may be the target UE. As another alternative implementation, the ranging initiating UE may not be the target UE.

In step 1102, the ranging initiating UE discovers the ranging UE by means of a direct communication, and sends a ranging service request to the ranging UE.

In step 1103, the ranging initiating UE receives a ranging result.

In the ranging method provided in the embodiment of the present disclosure, the ranging initiating UE may send the ranging service request including the identifier and the ranging parameter to the observation UE by means of the direct communication, so that the observation UE may perform ranging according to the identifier and the ranging parameter. Therefore, in the embodiment of the present disclosure, the ranging service request and the ranging result may be exchanged between the observation UE and the ranging initiating UE, so that the ranging service may be started based on an interaction between the UEs, thus ensuring the automation of the ranging method, improving the ranging efficiency and accuracy, reducing the power consumption, and improving user experience.

FIG. 12 is a flow chart of a ranging method provided in another embodiment of the present disclosure, which is applied to a ranging initiating UE. As shown in FIG. 12, the method may include steps as follows.

In step 1201, ranging service authentication is performed on a ranging UE and a ranging initiating UE, in which the ranging UE is a target UE, the ranging UE and the ranging initiating UE are different UEs, and there is a direct communication connection between the ranging UE and the ranging initiating UE.

As an alternative implementation, the ranging initiating UE may be the observation UE. As another alternative implementation, the ranging initiating UE may not be the observation UE.

In step 1202, the ranging initiating UE discovers the ranging UE by means of a direct communication, and sends a ranging service request to the ranging UE.

In step 1203, the ranging initiating UE receives a ranging result.

In the ranging method provided in the embodiment of the present disclosure, the ranging initiating UE may send the ranging service request including the identifier and the ranging parameter to the target UE by means of the direct communication, so that the target UE may send the ranging parameter to the observation UE according to the identifier for ranging. Therefore, in the embodiment of the present disclosure, the ranging service request and the ranging result may be exchanged directly between the target UE and the ranging initiating UE, so that the ranging service may be started based on an interaction between the UEs, thus ensuring the automation of the ranging method, improving the ranging efficiency and accuracy, reducing the power consumption, and improving user experience.

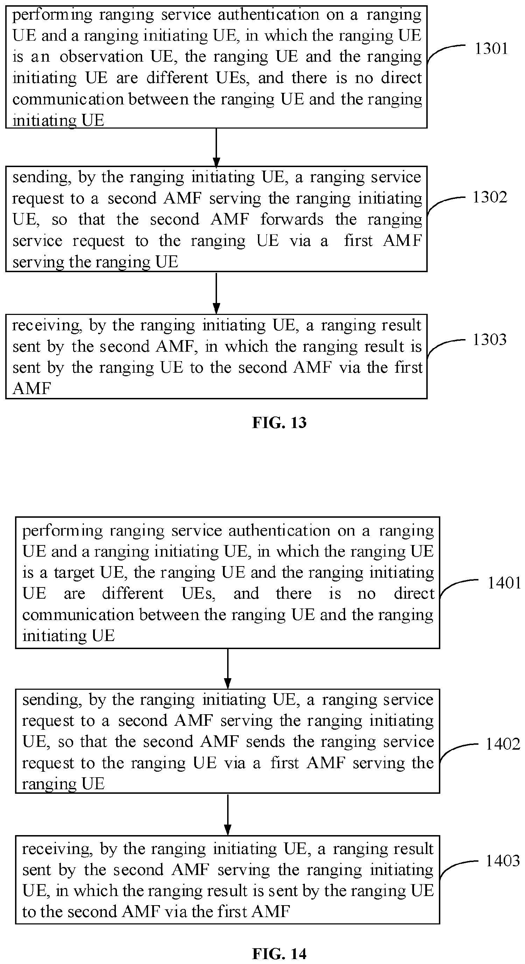

FIG. 13 is a flow chart of a ranging method provided in another embodiment of the present disclosure, which is applied to a ranging initiating UE. As shown in FIG. 13, the method may include steps as follows.

In step 1301, ranging service authentication is performed on a ranging UE and a ranging initiating UE, in which the ranging UE is an observation UE, the ranging UE and the ranging initiating UE are different UEs, and there is no direct communication between the ranging UE and the ranging initiating UE.

In step 1302, the ranging initiating UE sends a ranging service request to a second AMF serving the ranging initiating UE, so that the second AMF forwards the ranging service request to the ranging UE via a first AMF serving the ranging UE.

In step 1303, the ranging initiating UE receives a ranging result sent by the second AMF, in which the ranging result is sent by the ranging UE to the second AMF via the first AMF.

In the ranging method provided in the embodiment of the present disclosure, the ranging initiating UE may send the ranging service request including the identifier and the ranging parameter to the observation UE via the core network device (namely, an AMF in the 3GPP control plane), and receive the ranging result. Therefore, in the embodiment of the present disclosure, the observation UE and the ranging initiating UE may exchange the ranging service request and the ranging result at the 3GPP control plane, that is, the ranging service may be started based on the 3GPP control plane, thus ensuring the automation of the ranging method, ensuring a low latency ranging service, improving the ranging efficiency and accuracy, reducing power consumption, and improving user experience.

FIG. 14 is a flow chart of a ranging method provided in another embodiment of the present disclosure, which is applied to a ranging initiating UE. As shown in FIG. 14, the method may include steps as follows.

In step 1401, ranging service authentication is performed on a ranging UE and a ranging initiating UE, in which the ranging UE is a target UE, the ranging UE and the ranging initiating UE are different UEs, and there is no direct communication between the ranging UE and the ranging initiating UE.

In step 1402, the ranging initiating UE sends a ranging service request to a second AMF serving the ranging initiating UE, so that the second AMF sends the ranging service request to the ranging UE via a first AMF serving the ranging UE.

In step 1403, the ranging initiating UE receives a ranging result sent by the second AMF serving the ranging initiating UE, in which the ranging result is sent by the ranging UE to the second AMF via the first AMF.

In the ranging method provided in the embodiment of the present disclosure, the ranging initiating UE may send the ranging service request including the identifier and the ranging parameter to the target UE via the core network device (namely, an AMF in the 3GPP control plane), and receive the ranging result. Therefore, in the embodiment of the present disclosure, the target UE and the ranging initiating UE may exchange the ranging service request and the ranging result at the 3GPP control plane, that is, the ranging service may be started based on the 3GPP control plane, thus ensuring the automation of the ranging method, ensuring a low latency ranging service, improving the ranging efficiency and accuracy, reducing power consumption, and improving user experience.

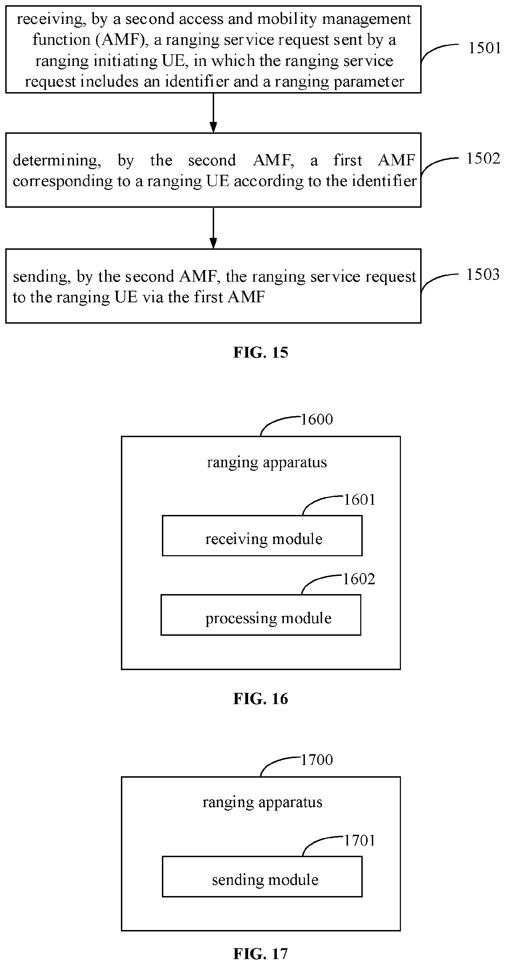

FIG. 15 is a flow chart of a ranging method provided in another embodiment of the present disclosure, which is applied to a second AMF of a core network device serving the ranging UE. As shown in FIG. 15, the method may include steps as follows.

In step 1501, a ranging service request sent by a ranging initiating UE is received by a second access and mobility management function (AMF), in which the ranging service request includes an identifier and a ranging parameter.

In step 1502, a first AMF corresponding to a ranging UE is determined by the second AMF according to the identifier.

As an alternative implementation, a method for determining, by the second AMF, the first AMF corresponding to the ranging UE according to the identifier may include as follows.

The second AMF queries the UDM according to the identifier of the observation UE and the identifier of the target UE. In case that the second AMF queries an AMF serving the observation UE, the second AMF determines the observation UE as the ranging UE and takes the AMF serving the observation UE as the first AMF. In case that the second AMF queries an AMF serving the target UE, the second AMF determines the target UE as the ranging UE and takes the AMF serving the target UE as the first AMF. In case that the second AMF queries an AMF serving the target UE and an AMF serving the observation UE, the second AMF determines any one of the target UE and the ranging UE as the ranging UE, and determines the AMF serving the ranging UE as the first AMF (that is, any one of the AMF serving the observation UE and the AMF serving the target UE).

In step 1503, the ranging service request is sent by the second AMF to the ranging UE via the first AMF.

As an alternative implementation, after step 1503, the method further includes receiving, by the second AMF, a ranging result sent by the ranging UE via the first AMF, and sending, by the second AMF, a ranging result to the ranging initiating UE.

In the ranging method provided in the embodiment of the present disclosure, the ranging initiating UE may send the ranging service request including the identifier and the ranging parameter to the ranging UE via the AMF in the 3GPP control plane. Therefore, in the embodiment of the present disclosure, the ranging UE and the ranging initiating UE may exchange the ranging service request at the 3GPP control plane, that is, the ranging service may be started based on the 3GPP control plane, thus ensuring the automation of the ranging method, ensuring a low latency ranging service, improving the ranging efficiency and accuracy, reducing the power consumption, and improving user experience.

It is to be noted that, as a possible implementation, the ranging initiating UE and the ranging UE do not need to be within 5G coverage in the above-mentioned methods shown in FIG. 1, FIG. 4, FIG. 5, FIG. 6, FIG. 7, FIG. 11, and FIG. 12.

As another possible implementation, the ranging initiating UE and the ranging UE may be within 5G coverage in the above-mentioned methods shown in FIG. 8, FIG. 9, FIG. 13, and FIG. 14.

FIG. 16 is a schematic diagram of a ranging apparatus provided in an embodiment of the present disclosure. As shown in FIG. 16, a ranging apparatus 1600 may include a receiving module 1601, and a processing module 1602.

The receiving module 1601 is configured to receive a ranging service request sent by a ranging initiating UE, in which the ranging service request includes an identifier and a ranging parameter.

The processing module 1602 is configured to determine a ranging role of the ranging UE according to the identifier in the ranging service request.

The processing module 1602 is further configured to perform ranging according to the ranging parameter and the ranging role.

The ranging apparatus provided in the embodiment of the present disclosure may be configured in any UE to execute the ranging method of any one of the above-mentioned FIG. 1, FIGS. 4 to 9.

In the ranging apparatus provided in the embodiment of the present disclosure, the ranging UE may receive the ranging service request including the identifier and the ranging parameter sent by the ranging initiating UE, and determine the ranging role of the ranging UE according to the identifier in the ranging service request, so that the ranging UE may perform ranging according to the ranging parameter and the ranging role. Therefore, in the embodiment of the present disclosure, two UEs to be ranged may directly discover each other based on the identifier in the ranging service request, so that a ranging UE in the two UEs to be ranged may automatically perform ranging, thus improving the ranging efficiency and accuracy, reducing power consumption, and improving user experience.

In a possible implementation of the present disclosure, the identifier includes an identifier of the observation UE and an identifier of the target UE, in which the processing module 1602 is further configured to determine that the ranging role of the ranging UE is the observation UE, in case that an identifier of the ranging UE is consistent with the identifier of the observation UE, and determine that the ranging role of the ranging UE is the target UE, in case that the identifier of the ranging UE is consistent with the identifier of the target UE.

Further, in another possible implementation of the present disclosure, when the ranging UE determines that the ranging role is the observation UE, the processing module 1602 is further configured to determine the target UE according to the identifier of the target UE, and perform ranging on the target UE according to the ranging parameter

Further, in another possible implementation of the present disclosure, when the ranging UE determines that the ranging role is the observation UE, the apparatus 1600 is further configured to send a ranging result to the ranging initiating UE.

Further, in another possible implementation of the present disclosure, when the ranging UE determines that the ranging role is the target UE, the processing module 1602 is further configured to determine the observation UE according to the identifier of the observation UE, and send the ranging parameter to the observation UE, in which the observation UE performs ranging on the ranging UE according to the ranging parameter.

Further, in another possible implementation of the present disclosure, the receiving module 1601 is further configured to receive the ranging service request sent by the ranging initiating UE via a core network device serving the ranging UE.

Further, in another possible implementation of the present disclosure, the receiving module 1601 is further configured to receive the ranging service request sent by a first access and mobility management function (AMF) serving the ranging UE.

Further, in another possible implementation of the present disclosure, the ranging initiating UE is the observation UE or the target UE.

It is to be noted that the above-mentioned explanation on the embodiment of the ranging methods shown in any one of FIG. 1 or FIGS. 4 to 9 is also applicable to the ranging apparatus 1600 shown in FIG. 16, which will not be elaborated herein.

FIG. 17 is a schematic diagram of a ranging apparatus provided in another embodiment of the present disclosure. As shown in FIG. 17, a ranging apparatus 1700 may include a sending module 1701.

The sending module 1701 is configured to send a ranging service request to a ranging UE, in which the ranging service request includes an identifier and a ranging parameter, and the ranging UE performs ranging according to the identifier and the ranging parameter.

The ranging apparatus provided in the embodiment of the present disclosure may be configured in any UE to execute the ranging method of any one of the above-mentioned FIGS. 10 to 14.

In the ranging apparatus provided in the embodiment of the present disclosure, the ranging initiating UE may send the ranging service request including the identifier and the ranging parameter to the ranging UE, so that the ranging UE may perform ranging according to the identifier and the ranging parameter. Therefore, in the embodiment of the present disclosure, two UEs to be ranged may directly discover each other based on the identifier in the ranging service request, so that a ranging UE in the two UEs to be ranged may automatically perform ranging, thus improving the ranging efficiency and accuracy, reducing power consumption, and improving user experience.

In a possible implementation of the present disclosure, the apparatus 1700 is further configured to receive a ranging result sent by the ranging UE.

Further, in another possible implementation of the present disclosure, the identifier of the ranging service request includes an identifier of an observation UE and an identifier of a target UE.

Further, in another possible implementation of the present disclosure, the sending module 1701 is further configured to discover the ranging UE by means of a direct communication, and send the ranging service request to the ranging UE.

Further, in another possible implementation of the present disclosure, the apparatus is further configured to receive the ranging result sent by a second access and mobility management function (AMF) serving the ranging initiating UE, in which the ranging result is sent by the ranging UE to the second AMF via a first AMF.

Further, in another possible implementation of the present disclosure, the ranging initiating UE is an observation UE or a target UE.

It is to be noted that the above-mentioned explanation on the embodiment of the ranging methods shown in any one of FIGS. 10 to 14 is also applicable to the ranging apparatus 1700 in FIG. 17, which will not be elaborated herein.

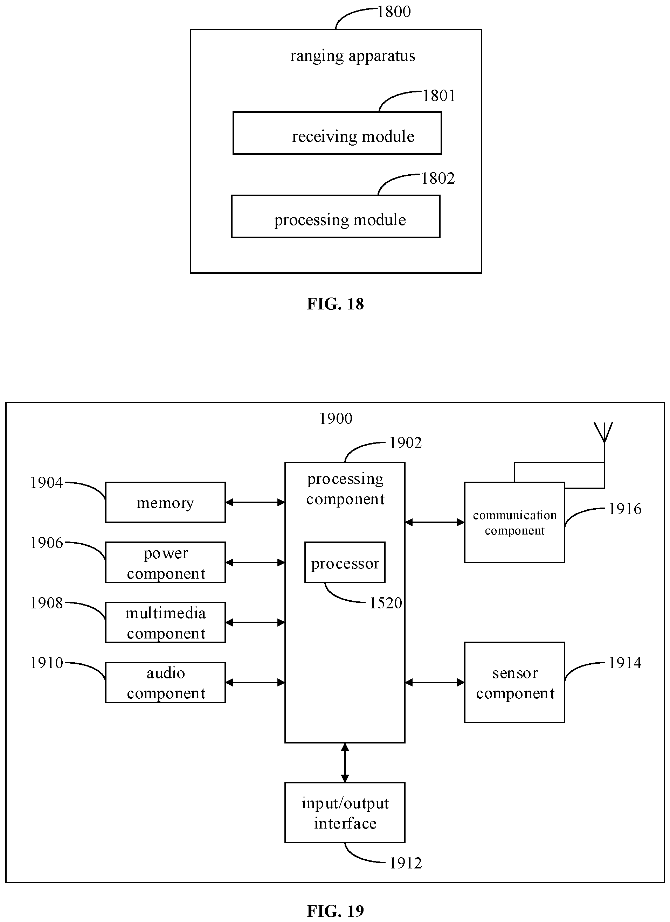

FIG. 18 is a schematic diagram of a ranging apparatus provided in an embodiment of the present disclosure. As shown in FIG. 18, a ranging apparatus 1800 may include a receiving module 1801, and a processing module 1802.

The receiving module 1801 is configured to receive a ranging service request sent by a ranging initiating UE, in which the ranging service request includes an identifier and a ranging parameter.

The processing module 1802 is configured to determine a first AMF corresponding to a ranging UE according to the identifier, and send the ranging service request to the ranging UE via the first AMF.

In the ranging apparatus provided in the embodiment of the present disclosure, the ranging initiating UE and the ranging UE may exchange the ranging service request at the 3GPP control plane through the ranging apparatus, that is, the ranging service may be started based on the 3GPP control plane, thus ensuring the automation of the ranging method, ensuring a low latency ranging service, improving the ranging efficiency and accuracy, reducing the power consumption, and improving user experience.

In a possible implementation of the present disclosure, the ranging apparatus is further configured to receive a ranging result sent by the ranging UE via the first AMF, and send a ranging result to the ranging initiating UE.

Further, in another possible implementation of the present disclosure, the processing module 1802 is further configured to take an AMF serving the observation UE as the first AMF, in case that the AMF serving the observation UE is queried, take an AMF serving the target UE as the first AMF, in case that the AMF serving a target UE is queried, and take an AMF serving any one of the observation UE and the target UE as the first AMF, in case that the AMF serving the target UE and the AMF serving the observation UE are queried.

In order to implement the above-mentioned embodiments, the present disclosure also provides a computer storage medium.

An embodiment of the present disclosure provides the computer storage medium. The computer storage medium having stored therein executable programs that, after executed by a processor, cause the ranging method provided in any one of the above-mentioned technical solutions, for example, as shown in at least one of FIG. 1, FIGS. 4 to 14 to be implemented.

In order to implement the above-mentioned embodiments, the present disclosure also provides a computer program product. The computer program product including a computer program that, when executed by a processor, cause the above-mentioned ranging method to be implemented.

In addition, in order to implement the above-mentioned embodiments, the present disclosure also provides a computer program. The computer program that, when executed by a processor, cause the ranging method described in FIG. 1, FIGS. 4 to 9, or FIGS. 10 to 14 of the present disclosure to be implemented.

FIG. 19 is a block diagram of a user equipment (UE) 1900 provided in an embodiment of the present disclosure. For example, the UE 1900 can be a mobile phone, a computer, a digital broadcast user equipment, a messaging device, a game console, a tablet device, a medical device, a fitness device, a personal digital assistant, or the like.

Referring to FIG. 19, the UE 1900 may include at least of the following components: a processing component 1902, a memory 1904, a power component 1906, a multimedia component 1908, an audio component 1910, an input/output (I/O) interface 1912, a sensor component 1914, and a communication component 1916.

The processing component 1902 typically controls overall operations of the UE 1900, such as the operations associated with display, phone calls, data communications, camera operations, and recording operations. The processing component 1902 can include at least one processor 1920 to execute instructions to perform all or some of the steps in the above-described methods. Moreover, the processing component 1902 may include at least one module which facilitate the interaction between the processing component 1902 and other components. For instance, the processing component 1902 may include a multimedia module to facilitate the interaction between the multimedia component 1908 and the processing component 1902.

The memory 1904 is configured to store various types of data to support the operation of the UE 1900. Examples of such data include instructions for any applications or methods operated on the UE 1900, contact data, phonebook data, messages, pictures, videos, etc. The memory 1904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1906 provides power to various components of the UE 1900. The power component 1906 may include a power management system, at least one power source, and any other components associated with the generation, management, and distribution of power in the UE 1900.

The multimedia component 1908 includes a screen providing an output interface between the UE 1900 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a wake up time and a pressure associated with the touch or swipe action. In some embodiments, the multimedia component 1908 includes a front camera and/or a rear camera. The front camera and/or the rear camera may receive an external multimedia datum while the user equipment 1900 is in an operation mode, such as a photographing mode or a video mode. Each of the front camera and the rear camera may be a fixed optical lens system or have focus and optical zoom capability.

The audio component 1910 is configured to output and/or input audio signals. For example, the audio component 1910 includes a microphone (MIC) configured to receive an external audio signal when the user equipment 1900 is in an operation mode, such as a call mode, a recording mode, and a voice recognition mode. The received audio signal may be further stored in the memory 1904 or transmitted via the communication component 1916. In some embodiments, the audio component 1910 further includes a speaker to output audio signals.

The I/O interface 1912 provides an interface between the processing component 1902 and peripheral interface modules, such as keyboards, click wheels, buttons, and the like. The buttons may include, but are not limited to, a home button, a volume button, a starting button, and a locking button.

The sensor component 1914 includes at least one sensor to provide status assessments of various aspects of the UE 1900. For instance, the sensor component 1914 may detect an open/closed status of the UE 1900, relative positioning of components, e.g., the display and the keypad, of the UE 1900, a change in position of the UE 1900 or a component of the UE 1900, a presence or absence of user contact with the UE 1900, an orientation or an acceleration/deceleration of the UE 1900, and a change in temperature of the UE 1900. The sensor component 1914 may include a proximity sensor configured to detect the presence of nearby objects without any physical contact. The sensor component 1914 may further include a light sensor, such as a CMOS or CCD image sensor, for use in imaging applications. In some embodiments, the sensor component 1914 may further include an accelerometer sensor, a gyroscope sensor, a magnetic sensor, a pressure sensor, or a temperature sensor.

The communication component 1916 is configured to facilitate communication, wired or wireless, between the UE 1900 and other devices. The UE 1900 can access a wireless network based on a communication standard, such as WiFi, 2G, or 3G, or a combination thereof. In an illustrative embodiment, the communication component 1916 receives a broadcast signal or broadcast associated information from an external broadcast management system via a broadcast channel. In an illustrative embodiment, the communication component 1916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 1900 may be implemented with at least one application specific integrated circuit (ASIC), a digital signal processor (DSP), a digital signal processing device (DSPD), a programmable logic device (PLD), a field programmable gate array (FPGA), a controller, a micro-controller, a microprocessor, or other electronic elements, for performing the above-mentioned method.

In an illustrative embodiment, there is also provided a non-transitory computer readable storage medium including instructions, such as included in the memory 1904, executable by the processor 1920 in the UE 1900, for completing the above-mentioned method. For example, the non-transitory computer-readable storage medium may be a ROM, a random access memory (RAM), a CD-ROM, a magnetic tape, a floppy disc, an optical data storage device, and the like.

In order to implement the above-mentioned embodiment, the present disclosure also provides a core network device, including a transceiver; a memory; and a processor connected to the transceiver and the memory, respectively, and configured to control wireless signal transmission and reception of the transceiver and be capable of implementing the method described in FIG. 15 by executing computer-executable instructions on the memory.

Other embodiments of the disclosure will be apparent to those skilled in the art from consideration of the specification and practice of the disclosure disclosed here. The present disclosure is intended to cover any variations, uses, or adaptations of the disclosure following the general principles thereof and including such departures from the present disclosure as come within known or customary practice in the art. It is intended that the specification and examples be considered as illustrative only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A ranging method, comprising:
receiving, by a ranging user equipment (UE), a ranging service request sent by a ranging initiating UE, wherein the ranging service request comprises an identifier and a ranging parameter;
determining, by the ranging UE, a ranging role of the ranging UE according to the identifier, wherein the ranging role comprises an observation UE or a target UE; and
performing, by the ranging UE, ranging according to the ranging parameter and the ranging role.

2. The method of claim 1, wherein the identifier comprises an identifier of the observation UE and an identifier of the target UE, wherein determining, by the ranging UE, the ranging role of the ranging UE according to the identifier in the ranging service request comprises:
in case that an identifier of the ranging UE is consistent with the identifier of the observation UE, determining, by the ranging UE, that the ranging role of the ranging UE is the observation UE; and
in case that the identifier of the ranging UE is consistent with the identifier of the target UE, determining, by the ranging UE, that the ranging role of the ranging UE is the target UE.

3. The method of claim 2, wherein when the ranging UE determines that the ranging role is the observation UE, performing, by the ranging UE, ranging according to the ranging parameter and the ranging role comprises:
determining, by the ranging UE, the target UE according to the identifier of the target UE; and
performing, by the ranging UE, ranging on the target UE according to the ranging parameter.

4. The method of claim 2, when the ranging UE determines that the ranging role is the observation UE, further comprising:
sending, by the ranging UE, a ranging result to the ranging initiating UE.

5. The method of claim 2, wherein when the ranging UE determines that the ranging role is the target UE, performing ranging according to the ranging parameter and the ranging role comprises:
determining, by the ranging UE, the observation UE according to the identifier of the observation UE; and
sending, by the ranging UE, the ranging parameter to the observation UE, wherein the observation UE performs ranging on the ranging UE according to the ranging parameter.

6. The method of any one of claims 1 to 5, wherein receiving, by the ranging UE, the ranging service request sent by the ranging initiating UE comprises:
receiving, by the ranging UE, the ranging service request sent by the ranging initiating UE via a core network device serving the ranging UE.

7. The method of claim 6, wherein receiving, by the ranging UE, the ranging service request sent by the ranging initiating UE via the core network device serving the ranging UE comprises:
receiving, by the ranging UE, the ranging service request sent by a first access and mobility management function (AMF) serving the ranging UE.

8. The method of claim 1, wherein the ranging initiating UE is the observation UE or the target UE.

9. A ranging method, comprising:
sending, by a ranging initiating user equipment (UE), a ranging service request to a ranging UE, wherein the ranging service request comprises an identifier and a ranging parameter, and the ranging UE performs ranging according to the identifier and the ranging parameter.

10. The method of claim 9, further comprising:
receiving, by the ranging initiating UE, a ranging result sent by the ranging UE.

11. The method of claim 10, wherein the identifier of the ranging service request comprises an identifier of an observation UE and an identifier of a target UE.

12. The ranging method of claim 9 or 10, wherein sending, by the ranging initiating UE, the ranging service request to the ranging UE comprises:
discovering, by the ranging initiating UE, the ranging UE by means of a direct communication, and sending, by the ranging initiating UE, the ranging service request to the ranging UE.

13. The ranging method of claim 10, wherein receiving, by the ranging initiating UE, the ranging result sent by the ranging UE comprises:
receiving, by the ranging initiating UE, the ranging result sent by a second access and mobility management function (AMF) serving the ranging initiating UE, wherein the ranging result is sent by the ranging UE to the second AMF via a first AMF.

14. The method of claim 9, wherein the ranging initiating UE is an observation UE or a target UE.

15. A ranging method, comprising:
receiving, by a second access and mobility management function (AMF), a ranging service request sent by a ranging initiating UE, wherein the ranging service request comprises an identifier and a ranging parameter;
determining, by the second AMF, a first AMF corresponding to a ranging UE according to the identifier; and
sending, by the second AMF, the ranging service request to the ranging UE via the first AMF.

16. The method of claim 15, further comprising:
receiving, by the second AMF, a ranging result sent by the ranging UE via the first AMF; and
sending, by the second AMF, a ranging result to the ranging initiating UE.

17. The method of claim 15, wherein determining, by the second AMF, the first AMF corresponding to the ranging UE according to the identifier comprises:
in case that the second AMF queries an AMF serving the observation UE, taking, by the second AMF, the AMF serving the observation UE as the first AMF;
in case that the second AMF queries an AMF serving a target UE, taking, by the second AMF, the AMF serving the target UE as the first AMF; and
in case that the second AMF queries an AMF serving the target UE and an AMF serving the observation UE, taking, by the second AMF, the AMF serving any one of the observation UE and the target UE as the first AMF.

18. A ranging apparatus, comprising:
a receiving module configured to receive a ranging service request sent by a ranging initiating UE, wherein the ranging service request comprises an identifier and a ranging parameter;
a processing module configured to determine a ranging role of the ranging UE according to the identifier in the ranging service request, wherein the ranging role comprises an observation UE or a target UE;
wherein the processing module is further configured to perform ranging according to the ranging parameter and the ranging role.

19. A ranging apparatus, comprising:
a sending module configured to send a ranging service request to a ranging UE, wherein the ranging service request comprises an identifier and a ranging parameter, and the ranging UE performs ranging according to the identifier and the ranging parameter.

20. A ranging apparatus, comprising:
a receiving module configured to receive a ranging service request sent by a ranging initiating UE, wherein the ranging service request comprises an identifier and a ranging parameter;
a processing module configured to determine a first AMF corresponding to a ranging UE according to the identifier, and send the ranging service request to the ranging UE via the first AMF.

21. A terminal device, comprising:
a transceiver;
a memory; and
a processor connected to the transceiver and the memory, respectively, and configured to control wireless signal transmission and reception of the transceiver and be capable of implementing the method of any one of claims 1 to 8, or claims 9 to 14 by executing computer-executable instructions on the memory.

22. A core network device, comprising:
a transceiver;
a memory; and
a processor connected to the transceiver and the memory, respectively, and configured to control wireless signal transmission and reception of the transceiver and be capable of implementing the method of any one of claims 15 to 17 by executing computer-executable instructions on the memory.

23. A computer storage medium having stored therein computer-executable instructions that, after executed by a processor, cause the method of any one of claims 1 to 8, or claims 9 to 14, or claims 15 to 17 to be implemented.
